Europäisches Patentamt

European Patent Office

Office européen des brevets

(11) Publication number: **0 030 797**

**A1**

(12) # EUROPEAN PATENT APPLICATION

(21) Application number: **80304136.7**

(22) Date of filing: **19.11.80**

(51) Int. Cl.³: **F 02 M 31/18**

(30) Priority: **06.12.79 GB 7942190**

(43) Date of publication of application:
**24.06.81 Bulletin 81/25**

(84) Designated Contracting States:
**DE FR IT SE**

(71) Applicant: **The Secretary of State for Industry in Her Britannic Majesty's Government of the United Kingdom of Great Britain and Northern Ireland 1 Victoria Street London S.W.1(GB)**

(72) Inventor: **Boam, Denis John**
**33 Rokeby Crescent**
**Strathavon Lanarkshire ML10 6EG Scotland(GB)**

(72) Inventor: **Finlay, Ian Chirnside**
**40 Laigh Road**
**Newton Mearns Glasgow G77 3EQ Scotland(GB)**

(74) Representative: **Wildman, David Brian et al,**
**Procurement Executive Ministry of Defence Patents**
**1A4, Room 1932 (19th Floor) Empress State Building**
**Lillie Road London SW6 1TR(GB)**

(54) Method and apparatus for vaporising liquid fuels.

(57) In order to increase the evaporation of the fuel component of an air/fuel mixture supplied to an internal combustion engine (1), the incoming mixture is caused to flow through a matrix (7) presenting a large surface area, preferably at least 40 square inches per litre of engine capacity, to the flow. The incoming air or mixture can be pre-heated, for example by exhaust gas recirculation (10) or by a heat exchanger through which exhaust heat is transferred indirectly to the air or mixture. The mixture flow through the matrix itself is, however, most preferably adiabatic. The construction of the matrix is preferably such as to induce as small as possible a resistance to flow, whilst ensuring that the greatest possible proportion of the liquid fuel droplets present in the mixture is deposited on its surfaces. An array of thin plates disposed parallel to the flow is especially suitable. Heat in the air is transferred to the fuel by direct transfer through the enlarged surface area of the deposited droplets, and indirectly through the structure of the matrix.

Fig.1.

This invention relates to internal combustion engines and in particular to a system for increasing the evaporation of the air/fuel mixture for combustion to improve engine performance.

It has been known for several years now that if the liquid petrol fed to a multicylinder spark ignition engine is vaporised before entering the intake manifold then significant improvements in engine performance can be obtained. These improvements are the result of two factors. Firstly vaporising the liquid fuel improves mixture homogeneity thereby allowing the engine to operate on leaner mixtures with improved thermal efficiency. Secondly if the fuel is vaporised immediately on starting the engine then the warm up time during which the engine is on choke is reduced. Reducing the time an engine is on choke is of particular assistance in reducing the exhaust emissions from the engine but it is also helpful in reducing fuel consumtion.

Previous attempts to improve fuel evaporation have relied on adding heat to the mixture, usually exhaust gas heat. The difficulties have been to add the heat without cracking the fuel as a result of local overheating or overheating the charge as a whole. Cracking the fuel leads to a power loss and to the formation of deposits on surfaces in the intake system. Overheating the entire mixture reduces its density resulting in a lower mass flowrate of mixture to the engine and hence a reduction in power output. It also increases the susceptibility to denotation ('knock') when the engine is running under high load. An ideal fuel vaporising system is thus one that achieves complete vaporisation of the fuel but adds the minimum amount of heat to the mixture.

An example of a fuel vaporiser which uses exhaust gas heat to vaporise the fuel is described in UK Patent No 1530285. As described therein a fuel vaporiser comprises an array of finned tubes disposed across the air/fuel intake of an internal combustion petrol engine. Exhaust gas is constrained to flow through the tubes so that heat from the exhaust gas is transferred to the air/fuel mixture to assist in vaporising the fuel element of the mixture. For a typical example of a 2 litre engine, a vaporiser of this type would normally have a total surface area of fins and tubes in contact with the mixture no more than about 70 sq in. This area would normally provide adequate heat transfer, and to increase the area to say 40 sq in per litre or more would normally not be considered necessary, and indeed would be thought undesirable because of the restrictive effect on the flow of mixture into the engine.

The inventors appreciate that the addition of large amounts of heat to the air/fuel mixture during normal running of a petrol engine is not necessary to ensure full vaporisation of the fuel.
However under normal conditions at the exit from the carburettor of a petrol engine only a small proportion of the fuel has been vaporised. The air temperature at entry to the carburettor is typically 30 to $40^\circ C$ where exhaust heat is employed to heat the incoming air, and the air temperature downstream of the carburettor is in general only a few degrees less. It follows that the mixture is far from thermodynamic equilibrium, only a small proportion of the heat in the air having been used to evaporate the fuel. Hence the inventors have appreciated that if a means could be devised by which the remainder of the available heat could be extracted from the air and transferred to the fuel ie if the air and fuel temperatures could be brought together as quickly as possible, a considerably greater proportion of fuel could be evaporated without the addition of further heat to the mixture.

According to the present invention, there is provided a system for increasing the evaporation of the fuel component of an air/fuel mixture prior to its combustion in an internal combustion engine, said system comprising an intake passage through which air can be conveyed into the engine, a fuel metering device for introducing liquid fuel into air within the intake passage to produce an air/fuel mixture therein and a matrix presenting a large external surface area within the intake passage downstream of the fuel metering device.

Normally the matrix will not include any heating means. The external surface area of the matrix should desirably be at least sufficient to ensure that substantially all liquid fuel droplets entrained in the air/fuel mixture contact and spread out over the surface of the matrix.

The external surface area of the matrix will preferably be at least about 40 to 50 square inches per litre capacity of the engine, and desirably will be between 60 and 80 square inches per litre, say about 70 square inches per litre capacity of the engine.

The matrix is preferably formed of a material having good thermal conductivity such as copper or aluminium.

Conveniently the matrix includes or consists of an array of thin plates extending across the intake passage.

The matrix should desirably divide the whole of the flow path for air/fuel mixture within the intake passage into narrow flow sections, and preferably the matrix elements should be substantially evenly distributed across the intake passage.

Advantageously in some instances there is provided upstream of the matrix means for heating the incoming air or air/fuel mixture, especially heating means which is effective mainly or solely during the period of engine warm-up and/or idling or light load.

According to another aspect of the invention, a method of increasing the evaporation of the fuel component of an air/fuel mixture prior to its combustion in an internal combustion engine comprises the steps of conveying air into the engine through an intake passage, metering liquid fuel into the air within the intake passage to produce an air/fuel mixture therein, and causing the air/fuel mixture to flow through a matrix presenting a large external surface area within the intake passage to the air/fuel mixture.

Normally the flow through the matrix will be adiabatic.

The invention will now be described by way of example only with reference to the accompanying drawings, of which

Figure 1 is a diagrammatic representation of a system in accordance with the invention.

Figure 2 is a sectional elevation on the line II-II of Figure 1 showing the matrix in greater detail,

Figure 3 is a sectional plan view on the line III-III of Figure 2,

Figure 4 is a sectional view on the line IV-IV of Figure 1,

Figure 5 is a sectional diagrammatic view of a pre-heater for incoming air for use in the system of Figures 1 to 4, and

Figure 6 is a sectional view on the line VI-VI of Figure 5.

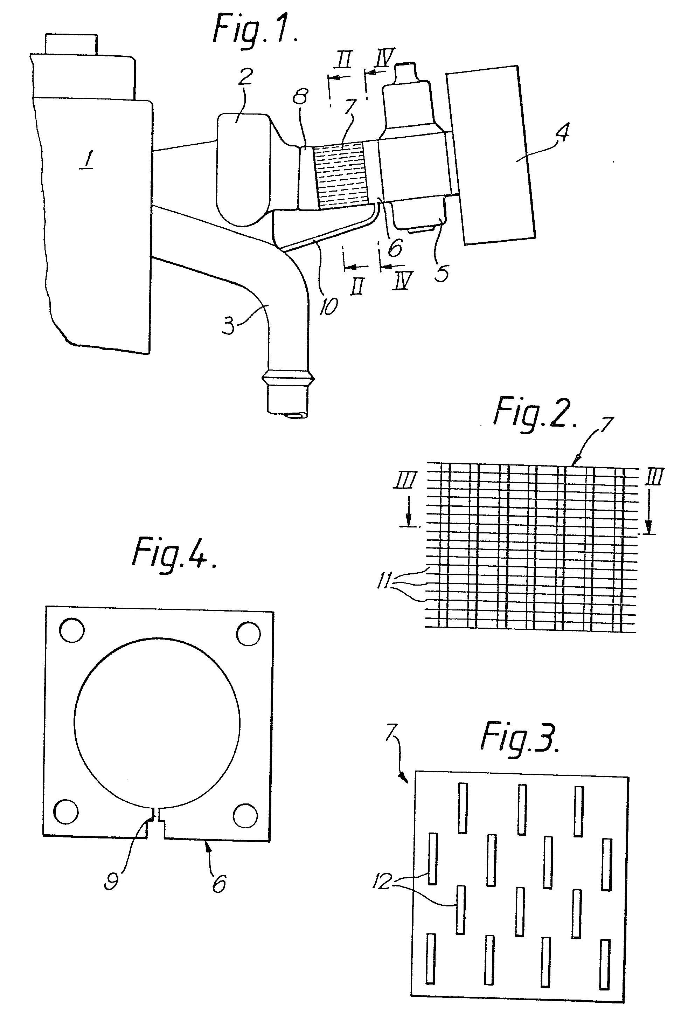

As shown in Figure 1 an engine 1 is provided with an intake manifold 2 and an exhaust manifold 3. The intake manifold 2 and exhaust manifold 3 are formed as a single casting to create a conventional exhaust heated hot spot.

Air is drawn into the engine through an intake passage passing through a conventional air filter 4, a conventional carburettor 5, an exhaust gas recirculation flange 6, a matrix 7, a tapered flange 8, and the intake manifold 2, all of which are connected in series.

The exhaust gas recirculation flange 6 is provided with an orifice 9 (Figure 4) through which exhaust gas can be ingested into the intake passage. A recirculation duct 10 is provided by which exhaust gas can be conveyed from the exhaust manifold 3 to the orifice 9. The orifice 9 is positioned just downstream of a variable throttle (not shown) of the carburettor 5, and is of a limited cross-sectional area. When the pressure in the intake passage in the region of the flange 8 falls to a low level, as when the engine is idling with the throttle closed, the mass flow rate of exhaust gas through the orifice 9 is limited by the gas reaching sonic velocity therein. Several such orifices 9 may be provided around the circumference of the flange 6, if desired. Means (not shown) may be provided for closing off the orifice 9 when the engine is sufficiently warmed up. Such means may be controlled eg by means of an appropriately positioned temperature sensor positioned in the engine block or in the flow path of the engine coolant.

The matrix 7 comprises an array of thin copper plates 11 disposed parallel to the flow direction of the air/fuel mixture. The plates 11 each extend right across the intake passage and serve to divide the flow path into a number of narrow channels. The plates 11 are supported on a number of rods or tubes 12 of rectangular section, each disposed with its long sides parallel to the flow direction so as to create the minimum resistance to the flow. If the plates 11 can be made self-supporting, the tubes are best dispensed with.

The matrix 7 is designed to provide the minimum impedence to the flow, but has a surface area substantially greater than, for example, heat exchangers which have previously been proposed for heating the air/fuel mixture in an intake passage. The matrix 11 is not provided with any heating means, and the flow of air/fuel mixture therethrough is substantially adiabatic (there may be some slight incidental heat exchange to the atmosphere through the walls of the matrix). The external surface area of the matrix which is contacted by the air/fuel mixture and the configuration and shape of the plates 11 is such that substantially all fuel droplets entrained in the mixture contact the matrix surface, and wet it and spread out thereon. The fuel droplets are thus brought substantially to rest relative to the flow through the intake passage, and are spread out so as to present a much increased surface area to the flow. Both of these factors greatly enhance the evaporation rate of the liquid droplets. Evaporation is further enhanced if the plates 11 are of a good thermally conducting material, because this facilitates transfer of heat from the air to the droplets through the plate material.

The tapered flange 8 has merely the function of tilting the intake passage slightly upwards, as in conventional good practice.

In use, when the engine 1 is started from cold, air is drawn in through the air filter 4 and fuel is metered in through the carburettor 5. Hot exhaust gas is almost immediately available for ingestion through duct 10 and orifice 9, until the engine is warmed up. During warm-up at idling, the flow rate of ingested exhaust gas is limited by its reaching sonic velocity in the orifice 9.

The air/fuel mixture then passes through the matrix 7. In one practical system it has been found that at least 65% of the fuel in the mixture is vaporised by the time the mixture reaches the intake manifold 2. In the case of a comparable engine without the matrix 7, it is found that only 25% of the fuel is vaporised. This is achieved without the addition of heat in the matrix, the effectiveness resulting from the matrix promoting the transfer of heat from the air to the fuel in the mixture, until a point is approached where air and fuel are in thermodynamic equilibrium, ie the mixture temperature has dropped and the vapour density has risen close to saturation. At this stage the liquid droplets remaining in the mixture will tend to be the less volatile fuel constituents. These are most effectively evaporated by the provision of the conventional exhaust heated hot spot, preferably located in the manifold downstream of the matrix and positioned normal to the general direction of flow to impact the fuel droplets directly on the hot surface.

By way of specific example the following data is given for a system as just described installed in a typical 2 litre engine.

Matrix:- No of fins : 20

Total surface area of fins : 0.129 m$^2$

Each fin 57.2 mm square

Height of fin array : 44.5 mm

Fins spaced evenly

Exhaust Gas Recirculation : Diameter of orifice 9 : 0.168 inch

With such a system, 15% of exhaust gas was recirculated following a cold start at 1000 rpm, resulting in a heating rate of 150 watts. The provision of the matrix enabled this heat to be utilised to the maximum, resulting in a predicted increase of 25% in evaporation rate.

The system described above achieved almost total utilisation of the available heat in the air/fuel mixture for a loss in maximum engine power of the engine of no more than 5%, which is regarded as acceptable in return for the advantage obtained.

After warm-up the exhaust gas recirculation circuit was automatically closed by means of a thermostatically controlled valve.  Such a valve can conveniently be made responsive, for example, to coolant temperature, or the temperature of the engine block, or to the temperature of air in the intake passage.

However, if desired this or another means of heating could with advantage be employed under other or all engine operating conditions.  If the heat is added upstream of the matrix the matrix greatly increases the utilisation of the added heat to evaporate the fuel droplets and the mixture temperature thus remains relatively low.  The addition of controlled amounts of heat without undue reduction in the density of the mixture and consequent drastic power loss is thus made possible.  Although heat could be added through the matrix structure, this is not normally desirable.

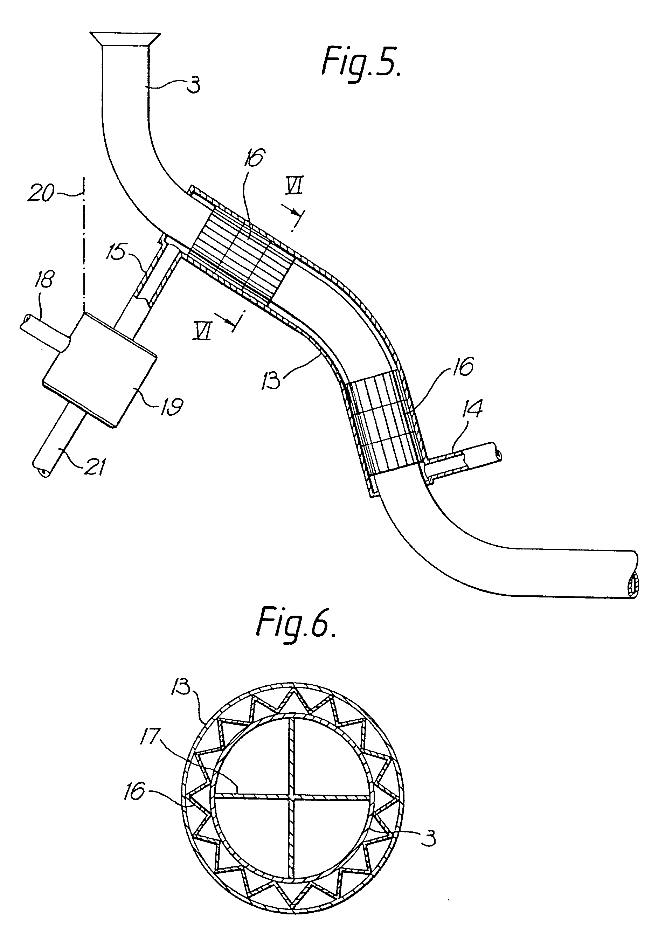

One particularly advantageous pre-heater device for heating the incoming air is shown diagrammatically in Figures 5 and 6.  As shown therein the lower portion of the exhaust pipe 3 is provided with a heat exchanger comprising a jacket 13 enclosing a length of the exhaust pipe 3.  Intake air can be admitted to the space between the jacket and the exhaust by an inlet 14 and can leave the space by way of an outlet 15.  In order to improve the heat transfer rate between the exhaust gas and the air, a zig-zag arrangement of fins 16 is attached to the outside of the exhaust pipe 3 within the jacket 13, and a cruciform arrangement of fins 17 is attached within the heat exchanger section of the exhaust pipe.  For the purpose of illustration, in Figure 5 the structure is shown with part of the jacket 13 removed so as to reveal the arrangement of fins 16.  As seen therein, for purposes of manufacturing convenience, the fins 16 are arranged as six similar annular sections, spaced in two groups of three along straight portions of the exhaust pipe.

Hot air leaving by the outlet 15 is mixed with ambient air taken in through an inlet 18, in a mixing device 19 which would normally be located in the housing of the air filter 4. The balance of the hot and ambient air flows is controlled by the device 19, which could be a conventional thermostatic air valve employing a bimetallic element to sense temperature and actuate the control mechanism. Additionally a signal provided via a line 20 could be used to allow cooler air to pass to the engine under conditions of high load or speed, when the throttle opening is wide. The line 20 can for example be a pneumatic line connected to transmit the manifold vacuum downstream of the carburettor 5, or an electrical line carrying an analogue signal representative of the throttle position. The output from the device 19 is provided an outlet 21 to the inlet of the filter 4.

In use, there will be an appreciable time delay following a cold start before the air reaching the outlet 21 achieves the desired temperature to effect as full as possible vaporisation of the fuel. At this stage, however, exhaust gas recirculated through pipe 10 provides an almost instantaneous source of heat by which fuel in the mixture can be vapourised. Once the engine reaches a predetermined running temperature, the flow or recirculated exhaust gas is halted, but the incoming air continues to be heated to a degree dependent upon the engine load, the lighter the engine and the lower its speed load, the greater the temperature of the incoming air.

At all times, the matrix 7 ensures that as much of the available heat as possible is utilised to ensure vaporisation of the fuel in the mixture.

Numerous variations of the embodiment described are possible without departing from the scope of the invention. Thus, for example, various methods of fuel metering are possible in place of the carburettor 5, for example fuel injectors or spraying devices. Also, although the invention has been specifically described in its application to a non-cross flow engine, it can be applied, possibly with even greater advantage, to a cross-flow engine in which the difficulty of supplying rapid heat by conventional warm-up devices is greater, due to the remote location of the exhaust.

Claims

1. A system for increasing the evaporation of the fuel component of an air/fuel mixture prior to its combustion in an internal combustion engine (1), said system comprising an intake passage through which air can be conveyed into the engine, and a fuel metering device (5) for introducing liquid fuel into air within the intake passage to produce an air/fuel mixture therein, and characterised by a matrix (7) presenting a large external surface area within the intake passage downstream of the fuel metering device.

2. A system according to claim 1 characterised in that the external surface area of the matrix is at least sufficient to ensure that substantially all liquid fuel droplets entrained in the air/fuel mixture contact and spread out over the surface of the matrix.

3. A system according to claim 1 or claim 2 characterised in that the external surface area of the matrix is at least 40 square inches per litre capacity of the engine.

4. A system according to claim 4 characterised in that the matrix (7) is formed of or includes copper or aluminium or is formed of other material having good thermal conductivity.

5. A system according to any one preceding claim characterised in that means (10; 13) are provided upstream of the matrix for adding heat to the incoming air or air/fuel mixture.

6. A system according to claim 5 characterised in that the said means for adding heat comprises a recirculation duct (10) connecting an exhaust duct of the engine with the intake passage.

7. A system according to claim 6 wherein the fuel metering device comprises a variable throttle and the recirculation duct connects with the intake passage downstream of the variable throttle, characterised in that the recirculation duct includes a portion (9) of restricted cross-section such that the flow rate of exhaust gas therethrough is restricted by its reaching sonic velocity when the engine is running and the opening of the throttle is small.

8. A system according to claim 5 including a heat exchanger (13) through which heat can be transferred from exhaust gas to air in the intake passage upstream of the matrix.

9. A system according to claim 8 characterised in that the intake passage has a branch through which ambient air can be drawn in, and a branch through which hot air from the heat exchanger can be drawn in, means being provided whereby said ambient air and said hot air can be mixed in controlled proportions.

10. A method of increasing the evaporation of the fuel component of an air/ fuel mixture prior to its combustion in an internal combustion engine comprising the steps of conveying air into the engine through an intake passage, and metering liquid fuel into the air within the intake passage to produce an air/fuel mixture therein, characterised by causing the air/fuel mixture to flow through a matrix presenting a large external surface area within the intake passage to the air/fuel mixture.

11. A method according to claim 10 chracterised in that the flow through the matrix is adiabatic.

Fig.1.

Fig.2.

Fig.4.

Fig.3.

Fig.5.

Fig.6.

| | European Patent Office | EUROPEAN SEARCH REPORT | Application number |
|---|---|---|---|

EP 80 30 4136.7

| | DOCUMENTS CONSIDERED TO·BE RELEVANT | | CLASSIFICATION OF THE APPLICATION (Int. Cl.3) |
|---|---|---|---|
| Category | Citation of document with indication, where appropriate, of relevant passages | Relevant to claim | |
| X | DE - C - 317 569 (E. SCHLEE) <br> * page 1, line 22 to page 2, line 17; fig. 1, 2 * | 1,2,10 | F 02 M 31/18 |
| | DE - A1 - 2 343 185 (SCHLADITZ-HUTZENLAUB GBR) <br> * page 3, last paragraph to page 7 * | 1,2,5, 6,10 | |
| A | FR - A - 774 718 (J. LOPEZ) <br> * whole document * | 9 | **TECHNICAL FIELDS SEARCHED (Int. Cl.3)** |
| A | FR - A - 597 112 (A. ARNOUX) <br> * page 1, line 40 to page 2, line 67 * | | F 02 M 31/00 |
| A | FR - A - 477 855 (ELECTRO GENERATEUR GAMMA) <br> * page 2, lines 46 to 58; fig. 1, positions a to c * | | |
| A | FR - A - 446 733 (L. DE GROULART FILS) <br> * whole document * | 9 | **CATEGORY OF CITED DOCUMENTS** <br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| A | US - A - 4 089 314 (G. BERNECKER) <br> * abstract * | | |
| | ./.. | | &: member of the same patent family, corresponding document |

| | | The present search report has been drawn up for all claims | |
|---|---|---|---|

| Place of search | Date of completion of the search | Examiner |
|---|---|---|
| Berlin | 24-02-1981 | STÖCKLE |

EPO Form 1503.1  06.78

0030797

European Patent
Office

EUROPEAN SEARCH REPORT

Application number

EP 80 30 4136.7
- page 2 -

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | DE - A1 - 2 632 238 (THE SECRETARY OF STATE FOR INDUSTRY) * claim 2 * | 9 | |
| D | & GB - A - 1 530 285 | | |

TECHNICAL FIELDS SEARCHED (Int. Cl.³)